# EUROPEAN PATENT SPECIFICATION

(11) **EP 2 671 654 B1**
(45) Date of publication and mention of the grant of the patent: **11.04.2018**
(21) Application number: 13170527.9
(22) Date of filing: 04.06.2013
(51) Int. Cl.: B21J 15/02, F16B 19/06

(54) **Punch rivet, riveted joint and riveting method**
Stanzniet, Nietverbindung und Nietverfahren
Rivet perforant, assemblage riveté et procédé de rivetage

(30) Priority: 05.06.2012 DE 102012011020
(43) Date of publication of application: 11.12.2013
(73) Proprietor: Newfrey LLC, New Britain, CT 06053 (US)
(72) Inventor: Opper, Reinhold, 35394 Giessen (DE); Schneider, Joachim, 35394 Giessen (DE)
(74) Representative: Witte, Weller & Partner Patentanwälte mbB

(56) References cited:
- EP-A1- 1 503 089
- EP-A1- 1 950 432
- AU-A- 1 220 770
- DE-A1- 19 927 103
- DE-B3-102007 046 788
- GB-A- 1 009 630
- US-A- 4 713 960
- US-A1- 2003 167 620

## Description

The present invention relates to a punch rivet for the joining of component parts, said punch rivet comprising a head portion and a shaft portion connecting to the head portion in a longitudinal direction, the shaft portion having a punching edge at an end remote from the head portion, and the head portion, at a head end portion remote from the shaft portion, having a greater outer diameter than the shaft portion.

The present invention also relates to a riveted joint having at least one first and at least one further component part, which are interconnected by a punch rivet formed during the joining process, and lastly relates to a method for producing such a riveted joint with use of a punch rivet.

Punch rivets are used for the joining of component parts, in particular sheet metal parts, wherein it is not necessary beforehand to punch holes in the sheet metal parts.

The component parts are placed on a die. A blank holder is arranged on the opposite side of the component parts, in such a way that the component parts are clamped between the blank holder and the die. The blank holder is hollow. A punch rivet is then driven into the arrangement of component parts. When using a solid punch rivet, which is formed as a solid, substantially undeformable joining element, plastic deformation occurs once the rivet has been punched through the component parts, in particular at the component part on the die side, and therefore the material thereof flows partly into an annular recess in the solid punch rivet. The finished riveted joint provides a positive and/or non-positive connection between the component parts in a longitudinal direction (direction of join) and/or in a direction transverse thereto.

In the case of "semi-tubular punch rivets", the shaft portion is not solid, but hollow. When producing a riveted joint, the hollow shaft portion punches into the arrangement of component parts and expands conically. In this variant, the rivet preferably does not punch through the component part on the die side.

It is known within the field of solid punch rivets to form the transition between the shaft portion and the head portion in a frustum-shaped manner. It is known to allow the frustum surface to transition into a cylindrical surface of a head end portion (GB-B-912,516, DE-OS 2 345 017, DE 297 07 669, EP 1 054 169 B1).

Alternatively, it is known to allow the frustum surface to transition in an acute-angled manner into an end face of the head portion (DE 298 22 745 U1). It is also known to provide the solid punch rivet in a generally cylindrical manner with a semicircular annular recess extending over more than 50 % of the longitudinal axis in longitudinal section (DE-OS 2 839 838, US-A-4,978,270, WO 97/413 59).

It is also known from document DE 100 60 421 C2 to design a transition between a cylindrical shaft portion and a cylindrical head end portion so as to be concave or channelled in longitudinal section.

Furthermore, it is generally known to provide a plurality of annular recesses in the shaft portion, said recesses being arranged offset in the longitudinal direction (US-A-4,978,270, EP 1 054 169 B1). A self-piercing rivet according to the preamble of claim 1 is known from EP 1 950 432 A1.

A solid rivet having a head portion divided in the longitudinal direction into a plurality of discrete sub-portions that transition into one another in a stepped manner, so that an annular plane is oriented between the two sub-portions in a direction transverse to the longitudinal direction is known from US-A-4,713,960.

In punch riveted joints of this type, a reduction in bending stresses is generally desired.

Consequently, the object of the invention is to develop an improved punch rivet, an improved riveted joint, and an improved riveting method, wherein at least one of the disadvantages of the prior art is avoided and/or wherein bending stresses during the joining process can be reduced.

The punch rivets should also preferably be producible as cost effectively as possible.

The above object is solved with a punch rivet as defined in claim 1.

In the present case, "discrete sub-portions" is understood to mean that the sub-portions may have different outer diameters, different outer shapes, different cone angles, different axial thicknesses and/or different shapes. According to the invention, the sub-portions are interconnected in a discontinuous manner. Two of the sub-portions and preferably also a head end portion (a sub-portion distanced farthest from the shaft portion) are preferably not designed cylindrically at the outer circumference, but with a geometry deviating from the cylinder shape. In a further preferred embodiment the head end portion is formed cylindrically at the outer circumference, wherein at least two discrete sub-portions are arranged between the head end portion and the shaft portion and are preferably not cylindrical.

The shaft portion can be produced from a solid material. In this case, the shaft portion may have at least one annular recess over its outer circumference so as to thus form a solid punch rivet.

Alternatively, the shaft portion may also be hollow. In this case, the rivet may be formed as a semi-tubular rivet, preferably of the so-called "C-type".

Punch riveting processes in which relatively low bending stresses occur can be implemented with at least one embodiment of the above mentioned punch rivet.

The novel design of a countersunk head for a punch rivet having a plurality of sub-portions also enables use with single-range and multi-range rivets. Furthermore, use with solid punch rivets and with semi-tubular punch rivets is preferably likewise possible.

Lastly, punch rivets having a countersunk head geometry of this type can be produced in a cost effective manner. The object is thus achieved completely.

In accordance with a particularly preferred embodiment, the number of discrete sub-portions lies in a range greater than 1 to 6, in particular in a range greater than 1 to 3.

Very good punch riveted joints can be produced with such a number of sub-portions.

In accordance with a further preferred embodiment, the number of discrete sub-portions is greater than 1 and fewer than 10, preferably greater than 2 and fewer than 9.

In this embodiment, punch rivets can be produced at low cost. In addition, the discrete sub-portions can be easily adapted to the respective function during the punch riveting process. According to the present invention, at least two of the sub-portions transition into one another in a stepped manner, so that an annular plane is oriented between two sub-portions in a direction transverse to, in particular perpendicular to, the longitudinal direction.

In accordance with a further preferred embodiment, at least two adjacent sub-portions are formed in a frustum-shaped manner in the longitudinal direction with different cone angles.

In this variant, a desired contour can be achieved by sub-portions having different frustum angles.

In accordance with a further preferred embodiment, at least one of the sub-portions has a grooved outer circumference. The groove may be partly circular in longitudinal section, partly elliptical, or the like. Grooved outer circumference portions may transition into one another in an obtuse-angled manner. Alternatively, it is possible for grooved portions to transition into one another in a wave-like manner.

In accordance with a further preferred embodiment, the head portion is divided in the longitudinal direction into a plurality of sub-portions, which form an enveloping contour at the outer circumference of the head portion.

In an embodiment the sub-portions are delimited from one another in such a way that they do not transition into one another continuously at the transition, and form in particular grooves in the outer circumference of the head portion.

The enveloping contour preferably forms the contour of the outer circumference of the head portion, this contour being essential to the punch riveting process.

In a variant, the enveloping contour can be frustum-shaped. The enveloping contour may be formed by a frustum having a uniform cone angle. Alternatively, one or more sub-portions may have different frustum angles, wherein the enveloping contour is then formed by the sum of these frustum-shaped sub-portions and extends along the adjacent transitions.

In accordance with a variant, it is preferable if the enveloping curve is formed in the manner of a function having at least one point of inflection, in such a way for example that there is a change from a concave enveloping contour portion to a convex enveloping contour portion or vice versa. Each concave and/or convex enveloping contour portion may be formed by a sub-portion or by a plurality of sub-portions.

In accordance with a particularly preferred embodiment, the enveloping contour has the shape of a sine function, which contains such a point of inflection.

In accordance with an alternative embodiment, the enveloping curve has a convex shape, which may preferably join onto a concave shape.

It is particularly preferable if a concave portion of an enveloping contour is adjacent to the shaft portion and if a convex portion of the enveloping contour is adjacent to a head end portion of the head portion.

It is also advantageous if at least one of the sub-portions has an indentation, which is set back with respect to the enveloping contour, for receiving a joining aid.

The indentation may be a radial indentation, but may also be an annular indentation extending over the entire outer circumference, as is possible in particular in one embodiment in which the sub-portions each have a grooved outer circumference or transition into one another in a wave-like manner. Even with the formation of the enveloping contour by a plurality of frustum-shaped sub-portions having different cone angles, the enveloping contour connects the connection points of the these frustum-shaped sub-portions, wherein at least one circular-segment-shaped annular indentation is formed between the enveloping contour and at least one planar frustum surface. With stepped sub-portions, such annular indentations can be formed by the steps themselves.

In particular, the joining aid may be a lubricant, which is introduced into the indentation for improved working during the punch riveting process. Alternatively or in addition, the joining aid may be an adhesive, which can increase the strength of a punch riveted joint.

In accordance with a further, generally preferred, embodiment, the punch rivet is produced from a material such as metal by cold forming at a temperature below a recrystallizing temperature of the material.

The punch rivet can be produced cost effectively by cold forming. In particular, close tolerances can thus be produced. The punch rivet can still be tempered after the cold forming process.

The punch rivet is preferably rotationally symmetrical, and therefore cold forming can be carried out by means of a cost-effective method.

In a riveted joint according to the invention, produced by means of a punch rivet of this type, it is advantageous if at least a head end portion of the punch rivet protrudes beyond a surface of the adjacent component part.

Whereas conventional punch rivet methods assume that the head portion is recessed completely in the adjacent component part, a protruding head end portion can be used in particular so as to attach functional elements to the head portion.

The above object is also achieved by a method for producing a riveted joint with use of a punch rivet according to the invention.

It is understood that the features discussed above and those yet to be explained hereinafter can be used not only in the specified combinations, but also in other combinations or alone, without departing from the scope of the present invention as defined in the appended claims.

Exemplary embodiments of the invention are illustrated in the drawing and will be explained in greater detail in the description below. In the drawing:
- Fig. 1: shows a view of an embodiment of a punch rivet according to the invention and a punch riveted joint produced by means of such a punch rivet;
- Fig. 2: shows a detail II of Fig. 1;
- Fig. 3: shows a detail corresponding to Fig. 2 of a further embodiment of a punch rivet according to the invention;
- Fig. 4: shows a detail corresponding to Fig. 2 of a further embodiment of a punch rivet according to the invention;
- Fig. 5: shows a detail corresponding to Fig. 2 of a punch rivet that does not form part of the invention;
- Fig. 6: shows a detail corresponding to Fig. 2 of a punch rivet that does not form part of the invention; and
- Fig. 7: shows a detail corresponding to Fig. 2 of a punch rivet that does not form part of the invention.

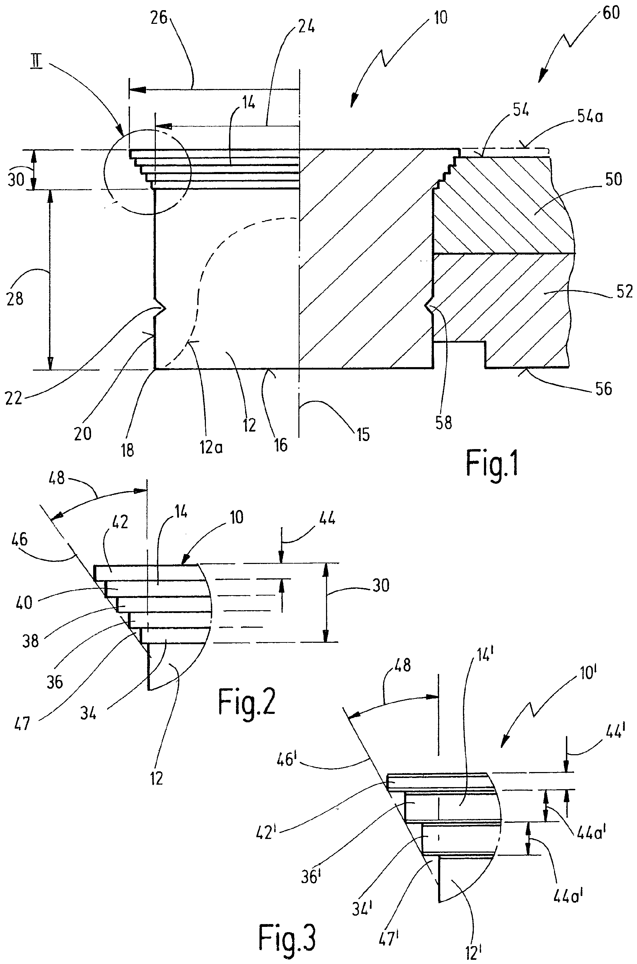

On the left-hand side, Fig. 1 shows a schematic illustration of an embodiment of a punch rivet according to the invention, denoted generally by 10.

The punch rivet 10 is formed as a solid punch rivet and has a substantially cylindrical shaft portion 12, which is connected integrally to a head portion 14. A longitudinal axis of the punch rivet 10 is shown at 15.

An end 16 of the shaft portion 12 remote from the head portion 14 is generally circular, wherein a punching edge 18 is formed between the end face 16 of the shaft portion 12 and the outer circumference 20 of the shaft portion 12. One or more annular recesses 22 offset from one another in the longitudinal direction may be formed in the outer circumference 20 of the shaft portion 12, this being indicated merely schematically in Fig. 1 for an individual annular recess 22.

The punch rivet 10 is rotationally symmetrical. An outer radius of the shaft portion 12 is shown at 24. The maximum outer radius of the head portion 14 is shown at 26. The head portion 14 has a countersunk head geometry on its side facing the shaft portion 12, said geometry being formed by the design of the transition from the outer circumference 20 of the shaft portion to the maximum outer diameter of the head portion 14. The axial length of the shaft portion is shown in Fig. 1 at 28. The axial length of the head portion 14 is shown at 30.

Before discussing the riveted joint shown to the right in Fig. 1 and produced by means of a punch rivet 10, the countersunk design of the head portion 14 will be discussed with reference to Fig. 2.

In the punch rivet 10, the head portion 14 is divided in the longitudinal direction 15 into a plurality of discrete sub-portions 34, 36, 38, 40, 42, which, in the present case, each have the same axial length or thickness 44. The first sub-portion 34 is adjacent to the shaft portion 12 and has a cylindrical outer circumference having a slightly greater diameter than the shaft portion 12. The second sub-portion 36 again has a cylindrical outer circumference, of which the outer diameter is greater than that of the first sub-portion 34. The third, fourth, and fifth sub-portions each likewise have cylindrical outer circumferences having increasingly greater outer diameters, wherein the fifth sub-portion 42 is formed as a head end portion, of which the upper face forms the axial end of the punch rivet 10.

The sub-portions 34 to 42 transition into one another in succession in a stepped manner. The outer diameter is selected in such a way that an enveloping curve 46 formed by the steps is frustum-shaped, with a cone angle 48 relative to the longitudinal axis 15.

The enveloping curve is formed by the edges of the steps. A radial indentation 47 is consequently formed between adjacent edges of the steps and, in the present case, is formed as an annular indentation in each case.

A joining aid can be introduced into the indentation 47 and, for example, may comprise a lubricant and/or an adhesive.

The fact that the rivet 10 may also be formed as a semi-tubular rivet is illustrated schematically on the left-hand side of Fig. 1. The shape of a shaft portion which can be used for this purpose is indicated in Fig. 1 at 12a.

Referring again to Fig. 1, a riveted joint 60 produced by means of the punch rivet 10 is shown on the right-hand side. The riveted joint 60 comprises a first component part 50 in the form of a sheet metal component part and a second component part 52 in the form of a further sheet metal component part.

In the present case, the uppermost sub-portion 42 (head end portion) protrudes beyond an upper face 54 of the upper component part 50. Functional elements can be attached to the head end portion.

In an alternative embodiment, the punch rivet 10 is driven into the upper component part 50 until its upper face terminates flush with the upper face of the component part 50, as shown schematically in Fig. 1 at 54a.

A lower face 56 of the lower component part 52 is preferably likewise oriented so as to be aligned with the end 16 of the shaft portion 12. In Fig. 1, it can also be seen that material of the lower (die-side) component part 52 flows into the annular recess 22 (illustrated at 58) during the punch riveting process. Consequently, the riveted joint 60 is formed with a positive fit in the radial direction and with a non-positive and/or positive fit in the axial direction. The shape of the annular recess 22 is only suggested in Fig. 1. The longitudinal sectional area of the recess 22 may also be shaped other than in a triangular manner, for example it may be formed in a channelled manner and/or may be larger than the annular recess 22 shown in Fig. 1.

The outer radius 24 of the shaft portion 12 may lie in a range of 1.7 to 2.8 mm, in particular in a range of 1.9 to 2.2 mm, or in particular in a range of 2.4 to 2.6 mm.

The outer radius 26 of the head portion 14 may lie in a range of 2.2 to 3.1 mm, in particular in a range of 2.3 to 2.5 mm, or in particular in a range of 2.9 to 3.0 mm.

The axial length 28 of the shaft portion may lie in a range, for example, of 2.5 to 8 mm, depending on the application and depending on whether the rivet is formed as a single-range or multi-range rivet.

The axial length 30 of the head portion 14 may lie in a range of 0.5 to 0.9 mm, preferably in a range of 0.6 to 0.8 mm.

The cone angle 46 may preferably lie in a range of 22° to 45°, in particular in a range of 25° to 40°. In a variant, the cone angle may lie in a range of 27° to 29°. In an alternative embodiment, the cone angle may lie in a range of 33° to 38°, in particular in a range of 34° to 36°.

The number of discrete sub-portions of the head portion 14 may lie in a range of 1 to 6, in particular in a range of 1 to 3. In the case of the punch rivet in Fig. 1, the number is 5.

The axial length 44 of the sub-portions is preferably a fraction of the axial length 30 of the head portion 14.

The following Figs. 3 to 7 show detailed drawings of further countersunk head geometries of punch, the Figs. 2 to 4 being according to the invention, which generally correspond to the punch rivet 10 in Figs. 1 and 2 in terms of structure and function. Like elements are therefore denoted by like reference signs and merely the main differences will be explained hereinafter.

Fig. 3 shows a punch rivet 10', in which the head portion 14' is divided into three sub-portions 34', 36', 42'. The sub-portions 34', 36' facing the shaft portion 12' each have the same axial length 44a', whereas the head end portion 42' has a shorter axial length 44'. The sub-portions 34', 36', 42' transition into one another in a stepped manner, as in the embodiment in Fig. 2.

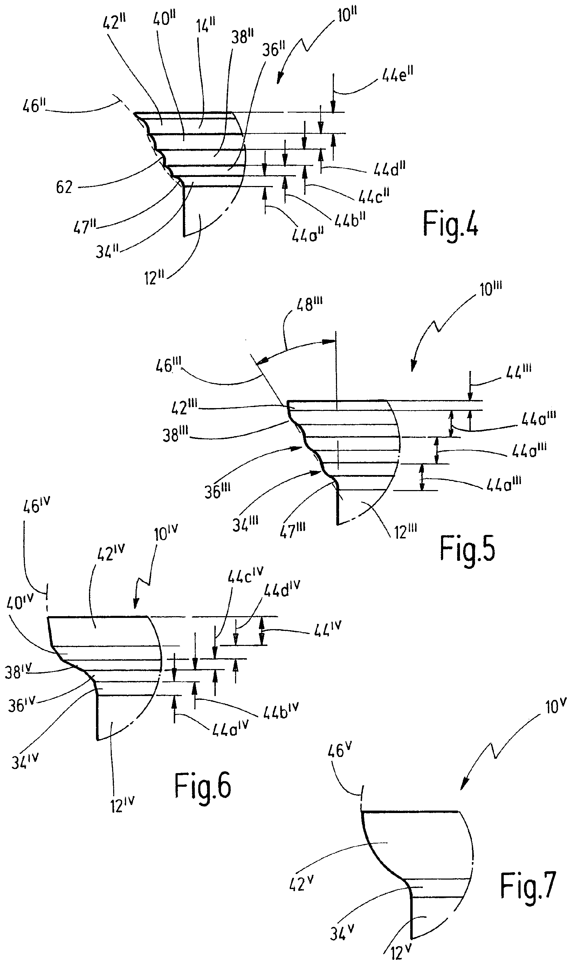

Fig. 4 shows a punch rivet 10", in which the head portion 14" has sub-portions 34", 36", 38", 40", 42", which each have a grooved outer circumference, as is indicated schematically in Fig. 4 at 62. The outer circumferences are each concave so that adjacent sub-portions transition into one another in an obtuse-angled manner.

The sub-portions each have different thicknesses 44a", 44b", 44c", 44d", 44e", wherein the thicknesses 44a", 44b" of the sub-portions 34", 36" facing the shaft portion 12" are smaller than the thicknesses of the other sub-portions.

The sub-portions 34" to 42" form an enveloping curve 46" at their outer circumference, said curve being undulating, in particular in the manner of a function which has at least one point of inflection. Generally, the enveloping curve 46" can be sinusoidal, but may also be wave-like.

Fig. 5 shows an embodiment that does not form part of the present invention, of a punch rivet 10"', which has four sub-portions 34"', 36"', 38'", 42'" which are each formed in a wave-like manner at their outer circumference and transition continuously into one another. An enveloping curve 46''' is again frustum-shaped, with a frustum angle 48"', which may lie, for example, in a range of 27 to 29°.

The axial thicknesses 44a'" of the sub-portions 34"', 36"', 38'" are each identical. The axial thickness of the head end portion 42'" is shown at 44"' and is smaller than the axial thickness of the other sub-portions. The head end portion 42'" can be formed cylindrically at its outer circumference.

Fig. 6 shows a further embodiment that does not form part of the present invention, of a punch rivet 10^{IV}, in which five sub-portions 34^{IV}, 36^{IV}, 38^{IV}, 40^{IV}, 42^{IV} are provided. The sub-portions are each frustum-shaped, more specifically with different cone angles. An enveloping curve 46^{IV} formed by the different frustum portions may be sinusoidal, for example.

In particular, the enveloping curve 46^{IV} is formed so that a portion of the enveloping curve 46^{IV} adjacent to the shaft portion 12^{IV} is concave, whilst a portion of the enveloping curve 46^{IV} adjacent to the head end portion 42^{IV} is convex.

The axial thicknesses of the sub-portions may differ, as shown at 44a^{IV}, 44b^{IV}, 44c^{IV}, 44d^{IV} and 44^{IV}. The axial length of the head end portion 42^{IV} may be greater than that of the other sub-portions. Furthermore, the head end portion 42^{IV} may be formed as a frustum-shaped portion, which has frustum angle < 10°. At least one of the sub-portions between the head end portion 42^{IV} and the sub-portion 34^{IV} adjacent to the shaft portion 12^{IV} has a cone angle greater than 45°.

Due to the formation of an initially concave and then convex shape, the enveloping contour 46^{IV} has at least one point of inflection as a function.

Fig. 7 shows a detail of a further embodiment that does not form part of the present invention, of a punch rivet 10^{V}, of which the enveloping curve 46^{V} can be identical to the enveloping curve 46^{IV} of the punch rivet 10^{IV}. However, in the present case, the head portion merely has two sub-portions 34^{V} and 42^{V}, wherein the sub-portion 34^{V} adjacent to the shaft portion 12^{V} has a concave shape, and wherein the sub-portion 42^{V} has a convex shape at the outer circumference.

## Claims

1. Punch rivet (10) for the joining of component parts (50, 52), said punch rivet comprising a head portion (14) and a shaft portion (12) connecting to the head portion (14) in a longitudinal direction (15), the shaft portion (12) having a punching edge (18) at an end (16) remote from the head portion (14), the head portion (14), at a head end portion remote from the shaft portion (12), having a greater outer diameter than the shaft portion (12), wherein
the head portion (14) is divided in the longitudinal direction (15) into a plurality of discrete sub-portions (34-42; 34', 36', 42'; 34"', 36"', 38'", 42"'; 34^{V}, 42^{V}),
**characterized in that**,
at least two of the sub-portions (34-42) transition into one another in a stepped manner, so that an annular plane is oriented between the two sub-portions (34-42) in a direction transverse to the longitudinal direction.

2. Punch rivet according to Claim 1, **characterized in that** the number of discrete sub-portions (34-42; 34', 36', 42'; 34"', 36"', 38'", 42'"; 34^{V}, 42^{V}) lies in a range greater than 1 to 6, in particular in a range of greater than 1 to 3.

3. Punch rivet according to Claim 1 or 2, **characterized in that** the number of discrete sub-portions (34-42; 34', 36', 42'; 34"', 36"', 38'", 42'"; 34^{V}, 42^{V}) is greater than 1 and fewer than 10.

4. Punch rivet according to one of Claims 1 to 3, **characterized in that** at least two adjacent sub-portions (34^{IV}-42^{IV}) are formed in a frustum-shaped manner in longitudinal section with different cone angles.

5. Punch rivet according to one of Claims 1 to 4, **characterized in that** at least one of the sub-portions (34"-42") has a grooved outer circumference (62).

6. Punch rivet according to one of Claims 1 to 5, **characterized in that** the head portion (14) is divided in the longitudinal direction (15) into a plurality of sub-portions (34-42; 34', 36', 42'; 34"', 36"', 38"', 42"'; 34^{V}, 42^{V}), which form an enveloping contour (46) at the outer circumference of the head portion (14).

7. Punch rivet according to Claim 6, **characterized in that** the enveloping contour (46"-46^{IV}) has the shape of a sine function.

8. Punch rivet according to Claim 6 or 7, **characterized in that** the enveloping contour (42^{V}) has a convex shape.

9. Punch rivet according to one of Claims 6 to 8, **characterized in that** at least one of the sub-portions has an indentation (47), which is set back with respect to the enveloping contour, for receiving a joining aid.

10. Punch rivet according to Claim 9, **characterized in that** the joining aid includes a lubricant and/or an adhesive.

11. Punch rivet according to one of Claims 1 to 10, **characterized in that** the punch rivet (10) is produced from a material such as metal by cold forming at a temperature below a recrystallizing temperature of the material.

12. Riveted joint (60) comprising a first and at least one further component part (50, 52), which are interconnected by a punch rivet (10) according to one of Claims 1 to 11 formed during the joining process, wherein at least a head end portion (42) of the punch rivet (10) protrudes beyond a surface (54) of the adjacent component part (50).

13. Method for producing a riveted joint (60) with use of a punch rivet (10) according to one of Claims 1 to 11.

## Patentansprüche

1. Stanzniet (10) zum Verbinden von Bauteilen (50, 52), mit einem Kopfabschnitt (14) und einem in einer Längsrichtung (15) an dem Kopfabschnitt (14) anschließenden Schaftabschnitt (12), wobei der Schaftabschnitt (12) an einem dem Kopfabschnitt (14) abgewandten Ende (16) eine Stanzkante (18) aufweist, wobei der Kopfabschnitt (14) an einem dem Schaftabschnitt (12) abgewandten Kopfendabschnitt einen größeren Außendurchmesser als der Schaftabschnitt (12) aufweist, wobei der Kopfabschnitt (14) in Längsrichtung (15) in eine Mehrzahl von diskreten Teilabschnitten (34-42; 34', 36', 42'; 34"', 36"', 38"', 42'"; 34^{V}, 42^{V}) unterteilt ist,
**dadurch gekennzeichnet, dass**
wenigstens zwei der Teilabschnitte (34-42) stufenförmig ineinander übergehen, so dass eine Ringebene zwischen zwei Teilabschnitten (34-42) in einer Richtung quer zu der Längsrichtung ausgerichtet ist.

2. Stanzniet nach Anspruch 1, **dadurch gekennzeichnet, dass** die Anzahl der diskreten Teilabschnitte (34-42; 34', 36', 42'; 34"', 36"', 38"', 42'"; 34^{V}, 42^{V}) im Bereich größer als 1 bis 6 liegt, insbesondere im Bereich von größer als 1 bis 3 liegt.

3. Stanzniet nach Anspruch 1 oder 2, **dadurch gekennzeichnet, dass** die Anzahl der diskreten Teilabschnitte (34-42; 34', 36', 42'; 34"', 36"', 38"', 42'"; 34^{V}, 42^{V}) größer ist als 1 und kleiner als 10.

4. Stanzniet nach einem der Ansprüche 1 - 3, **dadurch gekennzeichnet, dass** wenigstens zwei aneinander angrenzende Teilabschnitte (34^{IV}-42^{IV}) im Längsschnitt kegelstumpfförmig mit unterschiedlichen Kegelwinkeln geformt sind.

5. Stanzniet nach einem der Ansprüche 1 - 4, **dadurch gekennzeichnet, dass** wenigstens einer der Teilabschnitte (34"-42") einen rillenförmigen Außenumfang (62) ausweist.

6. Stanzniet nach einem der Ansprüche 1 - 6, **dadurch gekennzeichnet, dass** der Kopfabschnitt (14) in Längsrichtung (15) in eine Mehrzahl von Teilabschnitten (34-42; 34', 36', 42'; 34"', 36'", 38'", 42'"; 34^{V}, 42^{V}) unterteilt ist, die am Außenumfang des Kopfabschnittes (14) eine Hüllkontur (46) bilden.

7. Stanzniet nach Anspruch 6, **dadurch gekennzeichnet, dass** die Hüllkontur (46"; 46^{IV}) die Form einer Sinusfunktion aufweist.

8. Stanzniet nach Anspruch 6 oder 7, **dadurch gekennzeichnet, dass** die Hüllkontur (42^{V}) eine konvexe Form aufweist.

9. Stanzniet nach einem der Ansprüche 6 - 8, **dadurch gekennzeichnet, dass** wenigstens einer der Teilabschnitte eine gegenüber der Hüllkontur zurückversetzte Vertiefung (47) zur Aufnahme eines Fügehilfsmittels aufweist.

10. Stanzniet nach Anspruch 9, **dadurch gekennzeichnet, dass** das Fügehilfsmittel einen Schmierstoff und/oder einen Klebstoff beinhaltet.

11. Stanzniet nach einem der Ansprüche 1 - 10, **dadurch gekennzeichnet, dass** der Stanzniet (10) aus einem Werkstoff wie Metall durch eine Kaltumformung bei einer Temperatur unterhalb einer Rekristallisationstemperatur des Werkstoffes hergestellt ist.

12. Nietverbindung (60) mit einem ersten und wenigstens einem weiteren Bauteil (50, 52), die durch einen während des Verbindungsprozesses umgeformten Stanzniet (10) nach einem der Ansprüche 1 - 11 miteinander verbunden sind, wobei wenigstens ein Kopfendabschnitt (42) des Stanznietes (10) gegenüber einer Oberfläche (54) des benachbarten Bauteils (50) übersteht.

13. Verfahren zum Herstellen einer Nietverbindung (60) unter Verwendung eines Stanznietes (10) nach einem der Ansprüche 1 - 11.

## Revendications

1. Rivet perforant (10) pour l'assemblage de composants (50, 52), ledit rivet perforant comprenant une partie tête (14) et une partie arbre (12) reliée à la partie tête (14) dans une direction longitudinale (15), la partie arbre (12) ayant une arête de perforation (18) à une extrémité (16) distante de la partie tête (14), la partie tête (14), à une partie d'extrémité de tête distante de la partie arbre (12), présentant un diamètre extérieur supérieur à la partie arbre (12), la partie tête (14) étant divisée dans la direction longitudinale (15) en une pluralité de sous-parties discrètes (34-42 ; 34', 36', 42' ; 34"', 36"', 38"', 42'" ; 34^{V}, 42^{V}), **caractérisé en ce qu'**au moins deux sous-parties (34-42) se prolongent l'une dans l'autre de manière échelonnée, de telle sorte qu'un plan annulaire soit orienté entre les deux sous-parties (34-42) dans une direction transversale à la direction longitudinale.

2. Rivet perforant selon la revendication 1, **caractérisé en ce que** le nombre de sous-parties discrètes (34-42 ; 34', 36', 42' ; 34"', 36"', 38"', 42'" ; 34^{V}, 42^{V}) se situe dans une plage supérieure à 1 à 6, et en particulier dans une plage supérieure à 1 à 3.

3. Rivet perforant selon la revendication 1 ou 2, **caractérisé en ce que** le nombre de sous-parties discrètes (34-42 ; 34', 36', 42' ; 34"', 36"', 38"', 42'" ; 34^{V}, 42^{V}) est supérieur à 1 et inférieur à 10.

4. Rivet perforant selon l'une des revendications 1 à 3, **caractérisé en ce qu'**au moins deux sous-parties adjacentes (34^{IV}-42^{IV}) sont en forme tronconique en coupe longitudinale à différents angles de cônicité.

5. Rivet perforant selon l'une des revendications 1 à 4, **caractérisé en ce qu'**au moins l'une des sous-parties (34"-42") a une circonférence extérieure rainurée (62).

6. Rivet perforant selon l'une des revendications 1 à 5, **caractérisé en ce que** la partie tête (14) est divisée dans la direction longitudinale (15) en une pluralité de sous-parties (34-42 ; 34', 36', 42' ; 34"', 36"', 38"', 42'" ; 34^{V}, 42^{V}), qui forment un contour enveloppant (46) à la circonférence extérieure de la partie tête (14).

7. Rivet perforant selon la revendication 6, **caractérisé en ce que** le contour enveloppant (46", 46^{IV}) a la forme d'une fonction sinusoïdale.

8. Rivet perforant selon la revendication 6 ou 7, **caractérisé en ce que** le contour enveloppant (42^{V}) présente une forme convexe.

9. Rivet perforant selon l'une des revendications 6 à 8, **caractérisé en ce qu'**au moins l'une des sous-parties présente une indentation (47), qui est disposée en retrait par rapport au contour enveloppant, pour la réception d'un auxiliaire de jonction.

10. Rivet perforant selon la revendication 9, **caractérisé en ce que** l'auxiliaire de jonction comprend un lubrifiant et/ou un adhésif.

11. Rivet perforant selon l'une des revendications 1 à 10, **caractérisé en ce que** le rivet perforant (10) est réalisé dans un matériau tel qu'un métal par formage à froid à une température inférieure à une température de recristallisation du matériau.

12. Assemblage riveté (60) comprenant un premier composant et au moins un autre composant (50, 52), qui sont interconnectés par un rivet perforant (10) selon l'une des revendications 1 à 11 formé pendant le processus d'assemblage, au moins une partie d'extrémité de tête (42) du rivet perforant (10) se trouvant en saillie relativement à une surface (54) du composant (50) adjacent.

13. Procédé de production d'un assemblage riveté (60) à l'aide d'un rivet perforant (10) selon l'une des revendications 1 à 11.
